# EUROPÄISCHE PATENTANMELDUNG

(11) **EP 2 631 321 A1**
(43) Veröffentlichungstag der Anmeldung: **28.08.2013**
(21) Anmeldenummer: 12156510.5
(22) Anmeldetag: 22.02.2012
(51) Int. Cl.: C23C 2/12, C23C 4/08, C23C 30/00, F01D 5/28, C23C 28/02, B32B 15/00

(54) **Keramisches Wärmedämmschichtsystem mit äußerer aluminiumreicher Schicht und Verfahren**

(71) Anmelder: Siemens Aktiengesellschaft, 80333 München (DE)
(72) Erfinder: Die Erfindernennung liegt noch nicht vor

(57) **Zusammenfassung**

Durch die Aufbringung von Partikeln aus Aluminium auf eine äußerste Schicht wird die keramische Schicht (10) vor den sogenannten CMAS-Angriffen besser geschützt.

## Beschreibung

Die Erfindung betrifft ein Schichtsystem mit keramischer Schicht, auf der eine aluminiumreiche äußere Schicht aufgebracht ist und ein Verfahren.

Bei Inspektionen von Gasturbinen werden insbesondere bei mit in Öl befeuerten Turbinen Angriffe auf Wärmedämmschichten beobachtet. Nähere Untersuchungen zeigen, dass - wie auch schon in Flugturbinen beobachtet wurde - CMAS-Angriffe der Auslöser der Schichtschädigungen waren. Eine Verbindung von Kalzium, Magnesium, Aluminium und Silizium bzw. Eisen führt zu niederschmelzenden Eutektika auf Wärmedämmschichten im Temperaturbereich um 1200°C - 1250°C oder höher. Diese Verbindungen lösen das zur Stabilisierung benötigte Yttriumoxid aus der Wärmedämmschicht. Dies führt zu stark monoklinen Phasenübergängen bei Temperaturwechsel in der Keramik, die zur Zerstörung der Wärmedämmschicht führen.

Bisher trat dieser Effekt in stationären Turbinen nur bedingt auf, da die Oberflächentemperaturen der eingesetzten Wärmedämmschicht die notwendigen Schmelztemperaturen von CMAS und Eisen nicht erreichten. Es war daher kein Schutz notwendig. Mit steigender Gastemperatur nimmt dieser Angriff im Umfang jedoch zu.

Es ist daher Aufgabe der Erfindung oben genanntes Problem zu lösen.

Die Aufgabe wird gelöst durch ein Schichtsystem gemäß Anspruch 1 und ein Verfahren gemäß Anspruch 6.

In den Unteransprüchen sind weitere vorteilhafte Maßnahmen aufgelistet, die beliebig miteinander kombiniert werden können, um weitere Vorteile zu erzielen.

Im Rahmen von Untersuchungen mit Kleinstpartikeln aus Aluminium konnte gezeigt werden, dass solche Partikel in Verbindung mit CMAS hochschmelzende Verbindungen bilden, wie zum Beispiel Anorthit. Diese Partikel in der Größenordnung von 100nm bis 50µm lassen sich in eine Bindermatrix einbringen und mit einer Luftpistole leicht verspritzen. Diese Matrix wird auf eine Wärmedämmschichtoberfläche aufgebracht. Durch diese Kleinstpartikel hat man einerseits eine große aktive Fläche zur Verfügung, aber andererseits ist das System durch den lockeren Verbund sehr duktil. Die chemisch sehr aggressive CMAS-Verbindung reagiert mit dem Aluminium-Überschuß zu Anorthit. Dies ist eine hochschmelzende Verbindung, die den CMAS-Angriff unterbindet oder zumindest reduziert. Ein besonderer Vorteil dieser Beschichtung ist die Möglichkeit des wiederholten Aufbringens auch im eingebauten Zustand des Bauteils. Die sich aufbauende Anorthit-Schicht schützt zusätzlich vor dem Angriff der CMAS-Verbindung.

Die Aufbringung der aluminiumhaltigen Schutzschicht auf Lauf- und Leitschaufel einer Gasturbine kann auch im eingebauten Zustand erfolgen, wobei insbesondere eine Gehäusehälfte der Gasturbine geöffnet ist.

Die Beschichtung ist kostengünstig (Aluminiumpartikel in einer Bindermatrix) und leicht aufzubringen.

Das zusätzliche Schutzschichtsystem ermöglich dem Betreiber einer Gasturbine auch ein kostengünstiges teilstabilisiertes Zirkonoxid-System unter CMAS-Angriff zu betreiben.

Es zeigen
- Figur 1: ein erfindungsgemäßes Schichtsystem,
- Figur 2: eine Turbinenschaufel,
- Figur 3: eine Liste von Superlegierungen.

Die Beschreibung und die Figuren stellen nur Ausführungsbeispiele der Erfindung dar.

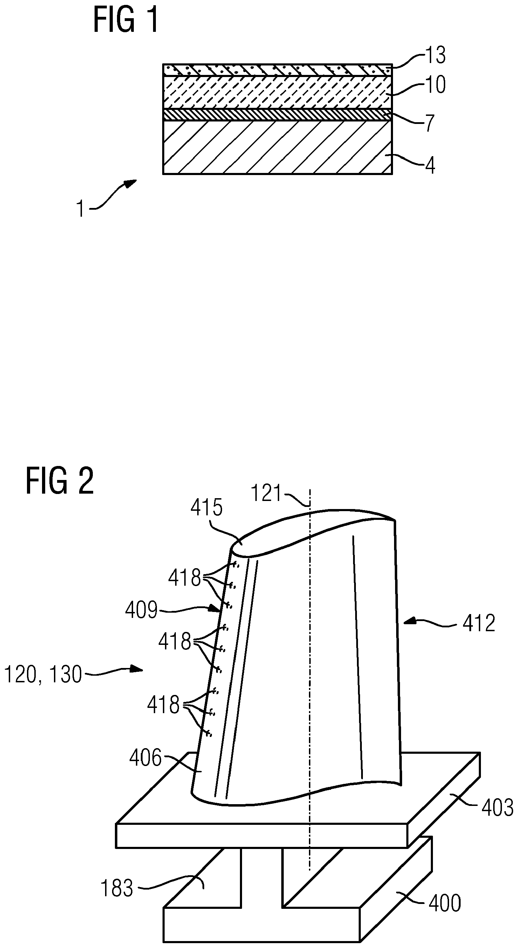

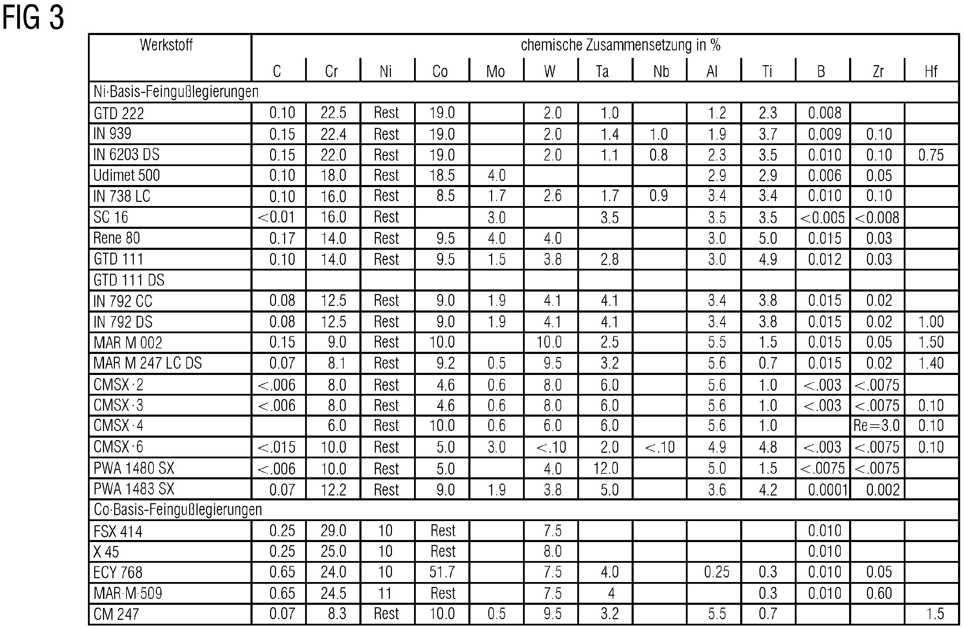

Figur 1 zeigt ein erfindungsgemäßes Schichtsystem 1. Das Schichtsystem 1 weist ein Substrat 4 auf. Das Substrat 4 weist auf, insbesondere besteht aus einer nickel- oder kobaltbasierten Superlegierung, insbesondere gemäß Figur 3.

Das Schichtsystem 1 weist weiterhin eine keramische Schicht 10 auf. Die keramische Schicht 10 kann Zirkonoxid, teilstabilisiertes Zirkonoxid oder zweischichtige keramische Systeme aus Zirkonoxid und/oder Pyrochlorphase wie Gadoliniumhafnat oder -zirkonat aufweisen.

Zwischen der keramischen Schicht 10 und dem Substrat 4 kann eine metallische Haftvermittlerschicht und/oder eine Aluminiumoxidschicht (TGO) vorhanden sein. Dies können Aluminidschichten oder NiCoCrAlY-Schichten sein, die die TGO ausbilden.

Weitere keramische Wärmedämmschichtsysteme, wie sie bei Hochtemperaturbauteilen insbesondere bei Turbinenschaufeln oder Bauteilen von Gasturbinen bekannt sind, können die Ausgangsbasis sein.

Als äußerste Schicht 13 auf der keramischen Schicht 10, die einem Heißgas in einer Gasturbine ausgesetzt ist im Falle einer Turbinenschaufel, ist eine Schicht aus Aluminiumpartikeln vorhanden.

Vorzugsweise besteht die Schicht aus Aluminium oder Aluminiumpartikel.

Die Partikelgröße liegt dabei vorzugsweise bei 0,1µm bis 50µm.

Aluminium weist immer eine Oxidschicht auf.

Insbesondere stellt der Anteil an Aluminium (Al) den größten Anteil dar.

Auch Schichten 13 mit Verbindungen, die Aluminium im überstöchiometrischen Verhältnis aufweisen oder Aluminium im Überschuss aufweisen, können verwendet werden, aber vorzugsweise keine Aluminide (NiAl, ..) oder MCrAlY's.

Mögliche Verfahren zum Aufbringen der Schicht 13 aus einer Emulsion aus den Al-Partikeln und Binder sind Sprühen (Auftragen mit Pinsel, Auftragen mit einer Rolle oder Eintauchen der Bauteile in die Emulsion.

Weitere Aluminiumbeschichtungsarten sind möglich, wie Plattieren von Aluminium.

Die Figur 2 zeigt in perspektivischer Ansicht eine Laufschaufel 120 oder Leitschaufel 130 einer Strömungsmaschine, die sich entlang einer Längsachse 121 erstreckt.

Die Strömungsmaschine kann eine Gasturbine eines Flugzeugs oder eines Kraftwerks zur Elektrizitätserzeugung, eine Dampfturbine oder ein Kompressor sein.

Die Schaufel 120, 130 weist entlang der Längsachse 121 aufeinander folgend einen Befestigungsbereich 400, eine daran angrenzende Schaufelplattform 403 sowie ein Schaufelblatt 406 und eine Schaufelspitze 415 auf.

Als Leitschaufel 130 kann die Schaufel 130 an ihrer Schaufelspitze 415 eine weitere Plattform aufweisen (nicht dargestellt).

Im Befestigungsbereich 400 ist ein Schaufelfuß 183 gebildet, der zur Befestigung der Laufschaufeln 120, 130 an einer Welle oder einer Scheibe dient (nicht dargestellt).

Der Schaufelfuß 183 ist beispielsweise als Hammerkopf ausgestaltet. Andere Ausgestaltungen als Tannenbaum- oder Schwalbenschwanzfuß sind möglich.

Die Schaufel 120, 130 weist für ein Medium, das an dem Schaufelblatt 406 vorbeiströmt, eine Anströmkante 409 und eine Abströmkante 412 auf.

Bei herkömmlichen Schaufeln 120, 130 werden in allen Bereichen 400, 403, 406 der Schaufel 120, 130 beispielsweise massive metallische Werkstoffe, insbesondere Superlegierungen verwendet.

Solche Superlegierungen sind beispielsweise aus der EP 1 204 776 B1, EP 1 306 454, EP 1 319 729 A1, WO 99/67435 oder WO 00/44949 bekannt.

Die Schaufel 120, 130 kann hierbei durch ein Gussverfahren, auch mittels gerichteter Erstarrung, durch ein Schmiedeverfahren, durch ein Fräsverfahren oder Kombinationen daraus gefertigt sein.

Werkstücke mit einkristalliner Struktur oder Strukturen werden als Bauteile für Maschinen eingesetzt, die im Betrieb hohen mechanischen, thermischen und/oder chemischen Belastungen ausgesetzt sind.

Die Fertigung von derartigen einkristallinen Werkstücken erfolgt z.B. durch gerichtetes Erstarren aus der Schmelze. Es handelt sich dabei um Gießverfahren, bei denen die flüssige metallische Legierung zur einkristallinen Struktur, d.h. zum einkristallinen Werkstück, oder gerichtet erstarrt.

Dabei werden dendritische Kristalle entlang dem Wärmefluss ausgerichtet und bilden entweder eine stängelkristalline Kornstruktur (kolumnar, d.h. Körner, die über die ganze Länge des Werkstückes verlaufen und hier, dem allgemeinen Sprachgebrauch nach, als gerichtet erstarrt bezeichnet werden) oder eine einkristalline Struktur, d.h. das ganze Werkstück besteht aus einem einzigen Kristall. In diesen Verfahren muss man den Übergang zur globulitischen (polykristallinen) Erstarrung meiden, da sich durch ungerichtetes Wachstum notwendigerweise transversale und longitudinale Korngrenzen ausbilden, welche die guten Eigenschaften des gerichtet erstarrten oder einkristallinen Bauteiles zunichte machen.

Ist allgemein von gerichtet erstarrten Gefügen die Rede, so sind damit sowohl Einkristalle gemeint, die keine Korngrenzen oder höchstens Kleinwinkelkorngrenzen aufweisen, als auch Stängelkristallstrukturen, die wohl in longitudinaler Richtung verlaufende Korngrenzen, aber keine transversalen Korngrenzen aufweisen. Bei diesen zweitgenannten kristallinen Strukturen spricht man auch von gerichtet erstarrten Gefügen (directionally solidified structures).

Solche Verfahren sind aus der US-PS 6,024,792 und der EP 0 892 090 A1 bekannt.

Ebenso können die Schaufeln 120, 130 Beschichtungen gegen Korrosion oder Oxidation aufweisen, z. B. (MCrAlX; M ist zumindest ein Element der Gruppe Eisen (Fe), Kobalt (Co), Nickel (Ni), X ist ein Aktivelement und steht für Yttrium (Y) und/oder Silizium und/oder zumindest ein Element der Seltenen Erden, bzw. Hafnium (Hf)). Solche Legierungen sind bekannt aus der EP 0 486 489 B1, EP 0 786 017 B1, EP 0 412 397 B1 oder EP 1 306 454 A1.

Die Dichte liegt vorzugsweise bei 95% der theoretischen Dichte.

Auf der MCrAlX-Schicht (als Zwischenschicht oder als äußerste Schicht) bildet sich eine schützende Aluminiumoxidschicht (TGO = thermal grown oxide layer).

Vorzugsweise weist die Schichtzusammensetzung Co-30Ni-28Cr-8Al-0,6Y-0,7Si oder Co-28Ni-24Cr-10Al-0,6Y auf. Neben diesen kobaltbasierten Schutzbeschichtungen werden auch vorzugsweise nickelbasierte Schutzschichten verwendet wie Ni-10Cr-12Al-0,6Y-3Re oder Ni-12Co-21Cr-11Al-0,4Y-2Re oder Ni-25Co-17Cr-10Al-0,4Y-1,5Re.

Auf der MCrAlX kann noch eine Wärmedämmschicht vorhanden sein, die vorzugsweise die äußerste Schicht ist, und besteht beispielsweise aus ZrO₂, Y₂O₃-ZrO₂, d.h. sie ist nicht, teilweise oder vollständig stabilisiert durch Yttriumoxid und/oder Kalziumoxid und/oder Magnesiumoxid.

Die Wärmedämmschicht bedeckt die gesamte MCrAlX-Schicht. Durch geeignete Beschichtungsverfahren wie z.B. Elektronenstrahlverdampfen (EB-PVD) werden stängelförmige Körner in der Wärmedämmschicht erzeugt.

Andere Beschichtungsverfahren sind denkbar, z.B. atmosphärisches Plasmaspritzen (APS), LPPS, VPS oder CVD. Die Wärmedämmschicht kann poröse, mikro- oder makrorissbehaftete Körner zur besseren Thermoschockbeständigkeit aufweisen. Die Wärmedämmschicht ist also vorzugsweise poröser als die MCrAlX-Schicht.

Wiederaufarbeitung (Refurbishment) bedeutet, dass Bauteile 120, 130 nach ihrem Einsatz gegebenenfalls von Schutzschichten befreit werden müssen (z.B. durch Sandstrahlen). Danach erfolgt eine Entfernung der Korrosions- und/oder Oxidationsschichten bzw. -produkte. Gegebenenfalls werden auch noch Risse im Bauteil 120, 130 repariert. Danach erfolgt eine Wiederbeschichtung des Bauteils 120, 130 und ein erneuter Einsatz des Bauteils 120, 130.

Die Schaufel 120, 130 kann hohl oder massiv ausgeführt sein. Wenn die Schaufel 120, 130 gekühlt werden soll, ist sie hohl und weist ggf. noch Filmkühllöcher 418 (gestrichelt angedeutet) auf.

## Patentansprüche

1. Schichtsystem (1),
das zumindest aufweist:
ein Substrat (4),
eine keramische Schicht (10) und
eine äußerste Schicht (13),
die (13) aluminiumreich ausgebildet ist,
insbesondere direkt auf der keramischen Schicht (10) und optional eine metallische Haftvermittlerschicht zwischen Substrat (4) und keramischer Schicht (10).

2. Schichtsystem (1) nach Anspruch 1,
bei dem die äußerste Schicht (13) Aluminiumpartikel aufweist,
insbesondere mit einer Partikelgröße von 100nm bis 50µm aufweist.

3. Schichtsystem nach einem oder beiden der Ansprüche 1 oder 2,
bei dem die keramische Schicht Zirkonoxid aufweist, insbesondere mit Yttriumoxid stabilisiert ist.

4. Schichtsystem nach einem oder mehreren der Ansprüche 1, 2 oder 3,
bei dem die äußerste Schicht aus Aluminium (Al) besteht.

5. Schichtsystem nach einem oder mehreren der vorherigen Ansprüche,
das als Turbinenbauteil ausgebildet ist,
insbesondere als Turbinenschaufel (120, 130).

6. Verfahren zur Herstellung eines Schichtsystems (1) gemäß Anspruch 1, 2, 3, 4 oder 5,
bei dem Aluminiumpartikel mittels Binder direkt auf eine keramische Schicht (10) aufgetragen werden.

7. Verfahren nach Anspruch 6,
bei dem der Auftrag der aluminiumhaltigen Schicht (13) im eingebauten Zustand eines Bauteils,
das das Schichtsystem (1) darstellt,
erfolgt.

8. Verfahren einem oder beiden der Ansprüche 6 oder 7,
das eine Partikelgröße für die Aluminiumpartikel von 100nm bis 50µm aufweist.

9. Verfahren nach einem oder beiden der Ansprüche,
bei eine Emulsion aus Aluminium-Partikel und Binder durch Sprayen, Pinseln, Aufrollieren oder Eintauchen aufgetragen wird.
